# EUROPEAN PATENT APPLICATION

(11) **EP 0 994 620 A1**
(43) Date of publication of application: **19.04.2000**
(21) Application number: 98402560.1
(22) Date of filing: 15.10.1998
(51) Int. Cl.: H04N 5/00

(54) **Digital decoder for audiovisual data and applications from a plurality of providers**

(71) Applicant: THOMSON multimedia, 92648 Boulogne Cédex (FR)
(72) Inventor: Schäfer, Ralf, 92648 Boulogne Cedex (FR); Letellier, Philippe, 92648 Boulogne Cedex (FR)
(74) Representative: Zhang, Jianguo

(57) **Abstract**

A digital decoder system designed to receive audiovisual data and applications through a delivery system from one or a plurality of application broadcasters comprises a registration database (7) to store characteristic data from at least one specific application, each specific application providing from a determined application broadcaster. An application launcher (9) is connected to the registration database and allows to select and launch one of the specific applications corresponding to the characteristic data stored in the registration database. A display means (6) is connected to the application launcher to present the specific applications related to the characteristic data stored in the registration database, and a user interface (10) allows to select and cause the application launcher to launch one of the presented specific applications.

## Description

The invention relates to the field of digital decoders which receive audiovisual data and applications through at least one delivery channel. The digital decoders may handle the audiovisual data and / or run an application, and output a result of handling and / or running in form of audiovisual data to a displaying device.

Today digital television is mainly operated in vertical markets, i.e. a broadcaster distributes several audio/visual/data services over a delivery system. Mostly broadcasters rely on established standards like MPEG-2 and DVB for transmitting audio, video and data, e.g. program specific information, service information, applications etc ... A part of the data is often transmitted via private descriptors or even via private data tables. Such vertical markets require digital decoders that are developed conform to the specification of broadcasters so as to be able to exploit the specific data. Often broadcasters provide an Electronic Program Guide (EPG) so as to allow the user to find a desired service. The EPG may for example be launched by a special key a remote control device which is used to control the digital decoder.

Currently there are efforts in standardization groups so as to specify a generic digital decoder platform. Such decoders for horizontal markets should be able to display audio/ video and run applications from several different broadcasters. As described above broadcasters widely use private data, which makes it nearly impossible to implement a generic EPG. Consequently, the broadcasters EPG will be the only application which can fully exploit all data transmitted by the broadcaster and will be the gate to the broadcasters commercial offer.

Digital decoders for horizontal markets must be able to switch conveniently between the different broadcasters which are accessible by the decoder. Applications (e.g. EPGs) cannot be launched by a simple keypress, but need a more generic mechanism. Further it is not known at the manufacturing date which and how many broadcasters will be supported by the digital decoder.

A digital decoder system according to the invention is designed to receive audiovisual data and applications through a delivery system from one or a plurality of application broadcasters and comprises
- a registration database to store characteristic data from at least one specific application, each specific application providing from a determined application broadcaster, and
- an application launcher which is connected to the registration database and allows to select and launch one of the specific applications corresponding to the characteristic data stored in the registration database.

A first preferred embodiment of a digital decoder system according to the invention comprises
- display means connected to the application launcher to present the specific applications related to the characteristic data stored in the registration database, and
- a user interface connected to the application launcher which allows to select and cause the application launcher to launch one of the presented specific applications.

A method according to the invention, for selecting a specific application in a digital decoder receiving audiovisual data and applications through a delivery system from one or a plurality of application broadcasters comprises
- compiling a set of a plurality of characteristic data corresponding to respectively one or a plurality of specific applications,
- selecting a specific application by selecting from the set the corresponding characteristic data stored, and
- launching the selected specific application.

The following is a description of examples which are given to better understand the invention. The examples are described making reference to Figures 1 to 3, in which
- Fig. 1 contains a schematic diagram of a digital decoder in a horizontal configuration,
- Fig. 2 contains a schematic representation of a registration data base,
- Fig. 3 contains a schematic partial representation of a digital decoder system.

During an installation of a digital decoder a registration data base is filled with data characterizing applications which are accessible by the decoder. Such applications may for example be EPGs and characterizing data may be the following:
- Application vendor name (e.g. a broadcaster's name)
- A logo representing the application (could be a logo for a program bundle of a broadcaster)
- A type of the application (e.g. an EPG-type)
- Address of the application. This could be a reference in the digital decoder file system or a link to a data stream. This data stream could come over broadcast, a modem or any other data source

The above listed data base keys are examples and are not entitled to be complete.

The registration data base should be exploited by an application launcher. The application launcher queries the registration data base and presents available applications in graphical menus. A user interface allows the user to navigate through the graphical menus, to select a desired application and thus to instruct the application to launch the running of the desired application.

An first advantage of the application launcher is that it allows to get information about which applications are available on all networks.

A second advantage of the application launcher is that it allows fast switching between at least two applications.

A third advantage of the application launcher is that it avoids launching conflicts between several concurrent applications, e.g. EPGs, which can occur in horizontal provider configuration.

Thus fast, safe and convenient selection of interactive applications (e.g. EPGs) may be achieved.

A fourth advantage of the application launcher is that it provides a generic, extensible and dynamic mechanism to install and launch applications in a digital decoder.

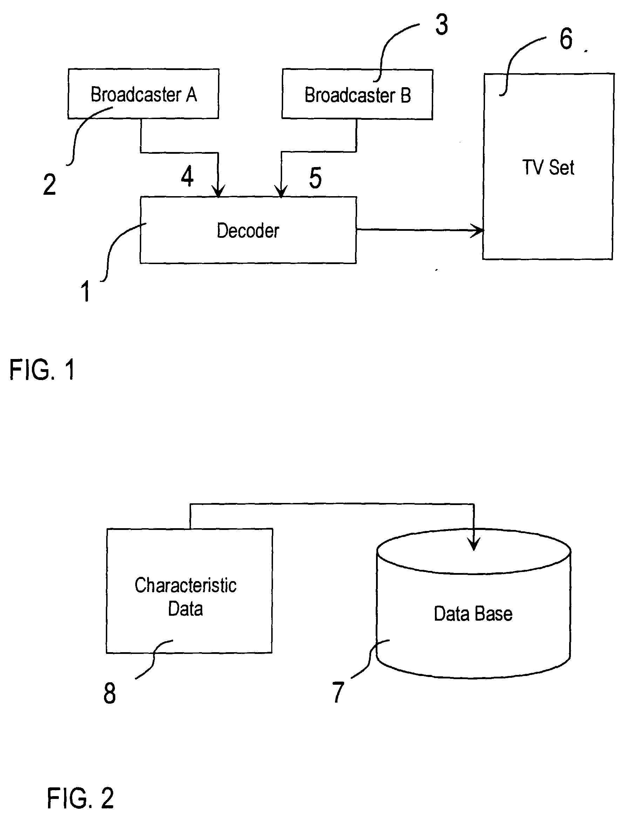

As may be seen in Fig. 1 a generic digital decoder 1 offers access to contents of a plurality of broadcasters, e.g. broadcasters A and B in boxes 2, 3 available over the delivery systems 4 and 5 connected to the generic digital decoder. The connected delivery systems 4 and 5 may for example be a cable network, a satellite receiving system or an aerial antenna. Caused by a wide usage of private data in current broadcast networks, an EPG of a broadcaster may be a candidate for the gate so as to enter a broadcasters world, i.e. an EPG-A from broadcaster A allows to select broadcaster's A applications, to watch and/or listen to broadcaster's A audiovisual programs using for example a TV set 6.

In horizontal markets there will be probably more than one EPG available, and therefore the concept of the keypress on the remote control so as to launch an EPG as known from prior art is too restricted. Rather a flexible, dynamic and extensible mechanism is required.

The generic digital decoder contains a registration data base 7 shown in Fig. 2, which stores characteristic data 8 for applications. The characteristic data 8 may for example be application name, icon, type or address.

The data is filled and stored in the registration data base 7 during an installation which in a simple implementation may be done via a set up procedure using a user activated menu, or in an automated decoder installation process. This will not be described in greater detail here.

The registration data base 7 is filled with application characteristic data 8 from one or a plurality of broadcasters.

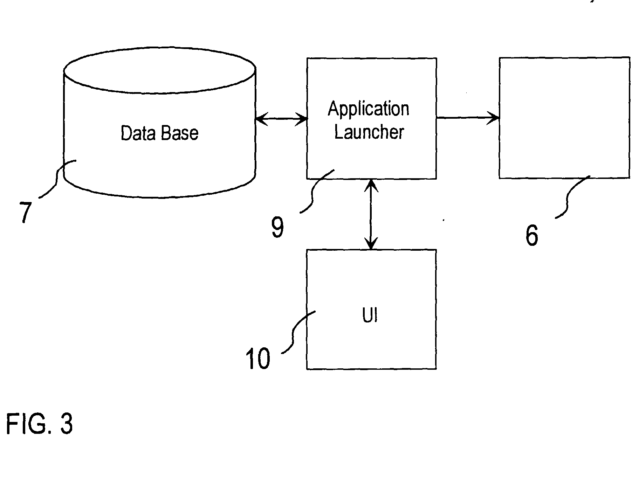

In Fig. 3 an application launcher 9 can query the registration data base 7 so as to get information about available applications in form of the stored characteristic data. The application launcher 9 presents all available applications to the user by means of a display device, for example the TV set 6. A user interface 10 may be connected to the application launcher 9 and allows the user to select and start the desired application. The user interface 10 may for example enable the user to point on the presented application on the TV set 6 with a cursor or an arrow generated on the TV set 6. The desired application may typically be a broadcaster's EPG.

After starting the broadcaster's EPG the user is in the broadcasters world and can select whatever audiovisual service or interactive application he likes using the user interface.

### List of references

1. generic digital decoder
2. broadcaster A
3. broadcaster B
4. delivery system
5. delivery system
6. TV set
7. registration data base
8. characteristic data
9. application launcher
user interface

## Claims

1. Digital decoder system designed to receive audiovisual data and applications through a delivery system (4, 5) from one or a plurality of application broadcasters comprising
• a registration database (7) to store characteristic data (8) from at least one specific application, each specific application providing from a determined application broadcaster (2, 3),
• an application launcher (9) which is connected to the registration database and allows to select and launch one of the specific applications corresponding to the characteristic data stored in the registration database.

2. Digital decoder system according to claim 1, characterized in that it comprises
• display means (6) connected to the application launcher to present the specific applications related to the characteristic data stored in the registration database,
• a user interface (10) connected to the application launcher which allows to select and cause the application launcher to launch one of the presented specific applications.

3. A method for selecting a specific application in a digital decoder receiving audiovisual data and applications through a delivery system (4, 5) from one or a plurality of application broadcasters comprising
• compiling a set of a plurality of characteristic data corresponding to respectively one or a plurality of specific applications,
• selecting a specific application by selecting from the set the corresponding characteristic data stored,
• launching the selected specific application.
